(19) Europäisches Patentamt / European Patent Office / Office européen des brevets

(11) **EP 4 679 522 A1**

(12) **EUROPEAN PATENT APPLICATION**
published in accordance with Art. 153(4) EPC

(43) Date of publication:
**14.01.2026 Bulletin 2026/03**

(21) Application number: **23962795.3**

(22) Date of filing: **29.12.2023**

(51) International Patent Classification (IPC):
$H01M\ 4/36^{(2006.01)}$    $H01M\ 4/587^{(2010.01)}$
$H01M\ 4/62^{(2006.01)}$    $H01M\ 10/0525^{(2010.01)}$

(52) Cooperative Patent Classification (CPC):
Y02E 60/10

(86) International application number:
**PCT/CN2023/143306**

(87) International publication number:
**WO 2025/138121 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.12.2023 CN 202311794719**

(71) Applicant: **Huizhou Liwinon New Energy Technology Co., Ltd.**
**Huizhou, Guangdong 516100 (CN)**

(72) Inventors:
• **GUO, Yafang**
**Huizhou, Guangdong 516100 (CN)**
• **LI, Fuhai**
**Huizhou, Guangdong 516100 (CN)**
• **WU, Shengben**
**Huizhou, Guangdong 516100 (CN)**

(74) Representative: **TRBL Intellectual Property**
**Plaza de Castilla 3, 7°A**
**28046 Madrid (ES)**

(54) **NEGATIVE ELECTRODE ACTIVE MATERIAL, AND PREPARATION METHOD THEREFOR AND USE THEREOF**

(57) A negative electrode active material, and a preparation method therefor and a use thereof. The negative electrode active material comprises a graphite material, and the graphite material comprises first graphite and second graphite. Two types of graphite having a certain pressure-relief rebound rate are selected, and are combined with a Dn10 range controlled and a distribution width limited. A negative electrode sheet can have high particle packing density and compaction level, so that good electrical contact between negative electrode active materials and sufficient infiltration of an electrolyte can both be ensured, thereby prolonging high-temperature cycle life while considering charging capability and energy density.

**EP 4 679 522 A1**

**Description**

**TECHNICAL FIELD**

The present disclosure belongs to the technical field of lithium batteries, and in particular relates to a negative electrode active material, a preparation method and use thereof.

**BACKGROUND**

Lithium batteries are an important class of rechargeable battery, widely used in mobile electronic devices, electric vehicles, and other fields. In lithium batteries, the negative electrode material plays a key role in storing and releasing lithium ions. Active materials that can be used as negative electrode materials for lithium batteries include silicon-based materials, metal oxides, and graphite.

Silicon is a high-capacity negative electrode material. Compared to graphite, silicon has a theoretical specific capacity of up to 4200 mAh/g, which is approximately ten times that of graphite. Silicon-based negative electrode materials can significantly enhance the energy density of lithium batteries. However, the volume expansion of silicon materials during charge and discharge processes can cause severe structural damage, leading to a sharp decline in cycle life. Metal oxides (such as tin compounds, lithium titanate, etc.) have also been widely studied as negative electrode materials for lithium batteries. These materials have higher theoretical specific capacities and more electron transfer reaction sites, thus providing greater capacity for storing lithium ions. However, these materials face issues of capacity fading and safety concerns. Graphite is one of the most common negative electrode materials for lithium batteries, which has high electrical conductivity, stable potential, and good cycle life. Graphite negative electrode materials are widely used in commercial lithium-ion batteries, but their capacity is relatively close to the limit and cannot meet the ever growing demand.

Currently, lithium-ion batteries (LIBs) have been widely used in portable electronic products due to their light weight, low cost, and long cycle life. Nevertheless, with the continuous updates of electronic digital products, there are increasingly higher demands for the energy density and fast-charging capabilities of lithium-ion batteries. To meet these new demands, it is still necessary to develop a novel negative electrode active material.

**SUMMARY**

The present disclosure aims at solving at least one of the technical problems existing in the prior art described above. Therefore, the present disclosure provides a negative electrode active material.

The present disclosure also provides a negative electrode sheet.

The present disclosure further provides a method for preparing the negative electrode sheet.

The present disclosure still provides use of the negative electrode active material or negative electrode sheet in a secondary battery, a battery module, a battery pack, or an electrical device.

The first aspect of the present disclosure provides a negative electrode active material comprising a graphite material, wherein the graphite material comprises a first graphite and a second graphite, a powder compaction depressurization rebound rate v of the first graphite and the second graphite is 5% to 12%, a ratio c of a number distribution particle size Dn10 of the first graphite and the second graphite is 1.2 to 3.5, a particle size distribution width of the first graphite and the second graphite satisfies 0.5 to 2.0, a Dv50 particle size $d_1$ of the first graphite is 10 $\mu$m to 15 $\mu$m, and a Dv50 particle size $d_2$ of the second graphite is 5 $\mu$m to 10 $\mu$m.

One technical solution regarding the negative electrode active material in the present disclosure has at least the following beneficial effects:

By selecting two types of graphite with a certain depressurization rebound rate, combined with controlling the range of Dn10 and limiting the distribution width, the negative electrode sheet can achieve a high particle packing density and an electrode sheet compaction level. This not only ensures good electrical contact between the negative electrode active materials but also guarantees sufficient electrolyte wetting, thereby enhancing high-temperature cycle life while balancing charging capability and energy density level. Specifically:

In the first aspect, the powder compaction depressurization rebound is positively correlated with the electrode sheet rolling rebound. A low depressurization rebound rate means a low electrode sheet rolling rebound. However, the depressurization rebound cannot be too small. Limiting the depressurization rebound range can alleviate the impact of the cell winding tension on the squeezing-out of the electrolyte at corners, effectively improving the penetration capability of electrolyte perpendicular to the electrode sheet at the corner arcs. When the depressurization rebound is limited in a range and designed in conjunction with specific surface area and particle size according to a specific formula, the lithium plating issue at corners can be effectively improved. The three factors work together and meet the above relationship, which can address the lithium plating issue at corners.

In the second aspect, Dn10 can accurately reflect the content of fine particles in the powder. Controlling the Dn10 ratio of the two types of graphite can adjust the filling rate of the gaps between graphite particles, thereby increasing packing density.

In the third aspect, controlling the particle size distribution width can adjust the content of fine powders. If it is too narrow, there will be fewer fine particles, which is not conducive to filling the pores with fine particles. If it is too wide, there will be more fine particles, which consumes more electrolyte and leads to more side reactions, resulting in poorer high-temperature cycling performance.

In the fourth aspect, the Dv50 particle size is closely related to the lithium ion transport path, and the smaller particle sizes are beneficial to lithium intercalation. The Dv50 particle size is also related to the gram capacity of graphite. Controlling the Dv50 of the first graphite and the second graphite can adjust the charging capability of the negative electrode. Larger particle sizes increase gram capacity, thereby enhancing the energy density.

In the present disclosure, by selecting two types of graphite with a certain depressurization rebound rate, combined with controlling the range of Dn10 and limiting the distribution width, the negative electrode sheet can achieve a high particle packing density and electrode sheet compaction level, which ensures good electrical contact between the negative electrode active materials.

Additionally, by limiting the depressurization rebound range, the impact of the cell winding tension on the squeezing-out of the electrolyte at corners can be alleviated, which effectively improves the penetration capability of electrolyte perpendicular to the electrode sheet at the corner arcs.

Limiting the specific surface area range allows the electrolyte to have sufficient wetting area to enhance the electrolyte penetration effects and mitigate side reaction issues caused by an excessively large specific surface area, which can balance high-temperature stability and initial efficiency.

Limiting the particle size range of the active material further ensures ion diffusion kinetics at corners, reduces concentration polarization and electrochemical polarization, thereby effectively lowering the risk of lithium plating at corners, and enhancing high-temperature cycle life while balancing charging capability and energy density level.

According to some embodiments of the present disclosure, the graphite material comprises at least one of artificial graphite and natural graphite.

According to some embodiments of the present disclosure, a specific surface area s of the negative electrode active material is 1.0 $m^2$/g to 2.0 $m^2$/g.

According to some embodiments of the present disclosure, the powder compaction depressurization rebound rate of the first graphite and the second graphite is 5% to 8%.

According to some embodiments of the present disclosure, the particle size distribution width of the first graphite and the second graphite satisfies 0.5 to 1.5.

According to some embodiments of the present disclosure, a mass ratio of the second graphite in the negative electrode active material is 5% to 40%.

According to some embodiments of the present disclosure, a mass ratio of the first graphite to the second graphite is 1-5:1.

According to some embodiments of the present disclosure, the specific surface area s of the negative electrode active material, the powder compaction depressurization rebound rate v, and the Dv50 particle size $d_1$ of the first graphite satisfy a relationship of: $s - 0.02 \times d_1 \leq 30v$.

According to some embodiments of the present disclosure, a method for preparing the graphite material comprises the following steps:

(1) mixing a graphite precursor and asphalt, heating a resulting mixture to a temperature, and maintaining the temperature for a period to obtain a granulated semi-finished product; and

(2) performing graphitization treatment on the product obtained in step (1) to obtain the graphite material.

According to some embodiments of the present disclosure, a mass ratio of the graphite precursor to asphalt is 7-9:1- 2.

According to some embodiments of the present disclosure, the resulting mixture is heated to a temperature of 250 °C to 550 °C.

According to some embodiments of the present disclosure, the temperature is maintained for a period of 5 hours to 48 hours.

According to some embodiments of the present disclosure, a temperature of the graphitization treatment is 2800 °C to 3500 °C.

According to some embodiments of the present disclosure, the graphitization treatment lasts for 10 hours to 200 hours.

According to some embodiments of the present disclosure, the graphite precursor comprises petroleum coke or needle coke.

By using asphalt as a coating agent, a residual carbon content of the coating layer after coating and carbonization can be controlled at 5% to 15%.

The second aspect of the present disclosure provides a negative electrode sheet, wherein preparation materials for the negative electrode sheet comprise the negative electrode active material of the present disclosure.

One of technical solutions regarding the negative electrode sheet in the present disclosure has at least the following beneficial effects.

The negative electrode sheet of the present disclosure, due to use of the negative electrode active material of the present disclosure, possesses all the beneficial effects of the negative electrode active material. This negative electrode sheet can achieve a high particle packing density and an electrode sheet compaction level. This not only ensures good electrical contact between the negative electrode active materials but also guarantees sufficient electrolyte wetting, thereby addressing the lithium plating issue at corners, and enhancing high-temperature cycle life while balancing charging capability and energy density level.

According to some embodiments of the present disclosure, the preparation materials for the negative electrode sheet further comprise a binder and a dispersant.

According to some embodiments of the present disclosure, the binder comprises styrene-butadiene rubber.

According to some embodiments of the present disclosure, the dispersant comprises sodium carboxymethyl cellulose.

The third aspect of the present disclosure provides a method for preparing the negative electrode sheet of the present disclosure, comprising the following steps: mixing the negative electrode active material of the present disclosure with a binder and a dispersant to form a negative electrode slurry, coating the negative electrode slurry onto a negative electrode current collector, and then drying to obtain the negative electrode sheet.

One of technical solutions regarding the method for preparing the negative electrode sheet in the present disclosure has at least the following beneficial effects:

The preparation method of the present disclosure does not require expensive equipment and complex process control. The reaction conditions are not stringent, the raw materials are readily available, the production cost is low, and it is easy for industrial production.

The fourth aspect of the present disclosure provides use of the negative electrode active material or the negative electrode sheet in a secondary battery, a battery module, a battery pack, or an electrical device.

One of technical solutions regarding use of the negative electrode active material or the negative electrode sheet in a secondary battery, a battery module, a battery pack, or an electrical device in the present disclosure has at least the following beneficial effects:

The negative electrode active material or the negative electrode sheet of the present disclosure, due to use of the negative electrode active material of the present disclosure, possesses all the beneficial effects of the negative electrode active material. This negative electrode sheet can achieve a high particle packing density and an electrode sheet compaction level. This not only ensures good electrical contact between the negative electrode active materials but also guarantees sufficient electrolyte wetting, thereby addressing the lithium plating issue at corners, and enhancing high-temperature cycle life while balancing charging capability and energy density level. Specifically:

For the secondary battery, a higher particle packing density and an electrode sheet compaction level can increase the loading capacity of the negative electrode active material, thereby enhancing the energy density of the battery, and extending the usage time of the battery. Good electrical contact can improve electronic conduction performance, reduce resistance loss, and improve the charging speed and efficiency of the battery. A higher electrode sheet compaction level can enhance the contact between the negative electrode active material and the electrolyte, allowing the electrolyte to more sufficiently wet the negative electrode active material, reducing interfacial impedance between the electrolyte and the negative electrode active material, and enhancing the high-temperature cycle life of the battery.

For the battery module, a higher particle packing density and an electrode sheet compaction level can increase the loading capacity of the negative electrode active material, thereby enhancing the energy density of the module, allowing the module to accommodate more charge and store more energy within a limited space. Good electrical contact can reduce internal resistance and improve current transmission capacity, allowing the battery module to output high power more rapidly.

For the battery pack, the safety can be enhanced. A higher particle packing density and an electrode sheet compaction level can reduce internal voids in the battery, which restricts the formation of lithium dendrites, thereby lowering the risk of internal short circuits and improving the safety performance of the battery pack. A higher compaction level can reduce the interfacial impedance between the negative electrode active material and the electrolyte, improve the charge transfer efficiency of the battery pack and extend the cycle life of the battery.

For the electrical device, the endurance of the electrical devices can be increased. A higher energy density can provide a battery with a larger capacity, extending the runtime of the electrical device, and meeting long-term usage needs. Additionally, it can improve the performance stability of the electrical device. Good electrical contact and sufficiently wetted electrolyte can improve the battery efficiency, reduce energy loss, and enhance the overall performance and stability of the electrical device.

Therefore, the secondary battery, battery module, battery pack, or electrical device comprising the negative electrode active material or the negative electrode sheet of the present disclosure can exhibit improved performance in terms of energy density, charging capability, high-temperature cycle life, power output, safety, and cycle life.

## DETAILED DESCRIPTION

The following are specific examples of the present disclosure. the technical solutions of the present disclosure are further described in conjunction with the examples, however, the present disclosure is not limited to these examples.

In some examples of the present disclosure, a negative electrode active material is provided, which comprises a graphite material. The graphite material comprises a first graphite and a second graphite, a powder compaction depressurization rebound rate of the first graphite and the second graphite is 5% to 12%, a ratio c of the number distribution particle size Dn10 of the first graphite and the second graphite is 1.2 to 3.5, a particle size distribution width of the first graphite and the second graphite satisfies 0.5 to 2.0, wherein a Dv50 particle size of the first graphite is 10 $\mu$m to 15 $\mu$m, and a Dv50 particle size of the second graphite is 5 $\mu$m to 10 $\mu$m.

It should be noted that Dn10 represents the particle size corresponding to the cumulative number percentage reaching 10%, meaning that the number of particles with a particle size smaller than that corresponding to Dn10 accounts for 10% of the total number of particles, which can more accurately and intuitively reflect the content of fine particles.

The term Dv50 refers to the particle size corresponding to the cumulative volume percentage of negative electrode active material reaching 50%, which is the volume distribution median particle size.

The particle size distribution width is expressed as (Dn90 - Dn10) / Dn50.

It can be understood that in the present disclosure, by selecting two types of graphite with a certain depressurization rebound rate, combined with controlling the range of Dn10 and limiting the distribution width, the negative electrode sheet can achieve a high particle packing density and an electrode sheet compaction level. This not only ensures good electrical contact between the negative electrode active materials but also guarantees sufficient electrolyte wetting, thereby enhancing high-temperature cycle life while balancing charging capability and energy density level.

In the first aspect, the powder compaction depressurization rebound is positively correlated with the electrode sheet rolling rebound. A low depressurization rebound rate means a low electrode sheet rolling rebound. However, the depressurization rebound cannot be too small. Limiting the depressurization rebound range can alleviate the impact of the cell winding tension on the squeezing-out of the electrolyte at corners, effectively improving the penetration capability of electrolyte perpendicular to the electrode sheet at the corner arcs. When the depressurization rebound is limited in a range and designed in conjunction with specific surface area and particle size according to a specific formula, the lithium plating issue at corners can be effectively improved. The three factors work together and meet the above relationship, which can address the lithium plating issue at corners.

In the second aspect, Dn10 can accurately reflect the content of fine particles in the powder. Controlling the Dn10 ratio of the two types of graphite can adjust the filling rate of the gaps between graphite particles, thereby increasing packing density.

In the third aspect, controlling the particle size distribution width can adjust the content of fine powders. If it is too narrow, there will be fewer fine particles, which is not conducive to filling the pores with fine particles. If it is too wide, there will be more fine particles, which consumes more electrolyte and leads to more side reactions, resulting in poorer high-temperature cycling performance.

In the fourth aspect, the Dv50 particle size is closely related to the lithium ion transport path, and the smaller particle sizes are beneficial to lithium intercalation. The Dv50 particle size is also related to the gram capacity of graphite. Controlling the Dv50 of the first graphite and the second graphite can adjust the charging capability of the negative electrode. Larger particle sizes increase gram capacity, thereby enhancing the energy density.

It should be noted that in the present disclosure, by selecting two types of graphite with a certain depressurization rebound rate, combined with controlling the range of Dn10 and limiting the distribution width, the negative electrode sheet can achieve a high particle packing density and an electrode sheet compaction level, which ensures good electrical contact between the negative electrode active materials.

Additionally, by limiting the depressurization rebound range, the impact of the cell winding tension on the squeezing-out of the electrolyte at corners can be alleviated, which effectively improves the penetration capability of electrolyte perpendicular to the electrode sheet at the corner arcs.

Limiting the specific surface area range allows the electrolyte to have sufficient wetting area to enhance the electrolyte penetration effects and mitigate side reaction issues caused by an excessively large specific surface area, which can balance high-temperature stability and initial efficiency.

Limiting the particle size range of the active material further ensures ion diffusion kinetics at corners, reduces concentration polarization and electrochemical polarization, thereby effectively lowering the risk of lithium plating at corners, and enhancing high-temperature cycle life while balancing charging capability and energy density level.

The specific surface area s of the active material, the powder compaction depressurization rebound rate v, and the Dv50 particle size $d_1$ of the first graphite satisfy a relationship of: $s - 0.02 \times d_1 \le 30v$. The three factors work together to address the lithium plating issue at corners.

In some examples of the present disclosure, the graphite material comprises at least one of artificial graphite and natural graphite.

In some examples of the present disclosure, a specific surface area s of the negative electrode active material is 1.0 m$^2$/g to 2.0 m$^2$/g.

In some examples of the present disclosure, the powder compaction depressurization rebound rate of the first graphite and the second graphite is 5% to 8%.

In some examples of the present disclosure, the particle size distribution width of the first graphite and the second graphite satisfies 0.5 to 1.5.

In some examples of the present disclosure, a mass ratio of the second graphite in the negative electrode active material is 5% to 40%.

In some examples of the present disclosure, a mass ratio of the first graphite to the second graphite is 1-5:1.

In some examples of the present disclosure, the specific surface area s of the negative electrode active material, the powder compaction depressurization rebound rate v, and the Dv50 particle size $d_1$ of the first graphite satisfy the relationship of: $s - 0.02 \times d_1 \le 30v$.

In some examples of the present disclosure, the method for preparing the graphite material comprises the following steps:

(1) mixing a graphite precursor and asphalt, heating a resulting mixture to a temperature, and maintaining the temperature for a period to obtain a granulated semi-finished product; and

(2) performing graphitization treatment on the product obtained in step (1) to obtain the graphite material.

In some examples of the present disclosure, a mass ratio of the graphite precursor to asphalt is 7 -9:1 -2.

In some examples of the present disclosure, the resulting mixture is heated to a temperature of 250 °C to 550 °C.

In some examples of the present disclosure, the temperature is maintained for a period of 5 hours to 48 hours.

In some examples of the present disclosure, a temperature of the graphitization treatment is 2800 °C to 3500 °C.

In some examples of the present disclosure, the graphitization treatment lasts for 10 hours to 200 hours.

In some examples of the present disclosure, the graphite precursor comprises petroleum coke or needle coke.

It should be noted that by using asphalt as a coating agent, a residual carbon content of the coating layer after coating and carbonization can be controlled at 5% to 15%.

In additional examples of the present disclosure, a negative electrode sheet is provided, wherein preparation materials for the negative electrode sheet comprise the negative electrode active material of the present disclosure.

It can be understood that the negative electrode sheet of the present disclosure, due to use of the negative electrode active material of the present disclosure, possesses all the beneficial effects of the negative electrode active material. This negative electrode sheet can achieve a high particle packing density and an electrode sheet compaction level. This not only ensures good electrical contact between the negative electrode active materials but also guarantees sufficient electrolyte wetting, thereby addressing the lithium plating issue at corners, and enhancing high-temperature cycle life while balancing charging capability and energy density level.

In some examples of the present disclosure, the preparation materials for the negative electrode sheet further include a binder and a dispersant.

In some examples of the present disclosure, the binder comprises styrene-butadiene rubber.

In some examples of the present disclosure, the dispersant comprisess sodium carboxymethyl cellulose.

In additional examples of the present disclosure, a method for preparing the negative electrode sheet of the present disclosure is provided, which comprises the following steps: mixing the negative electrode active material of the present disclosure with a binder and a dispersant to form a negative electrode slurry, coating the negative electrode slurry onto a negative electrode current collector, and then drying to obtain the negative electrode sheet.

It can be understood that the preparation method of the present disclosure does not require expensive equipment and complex process control. The reaction conditions are not stringent, the raw materials are readily available, the production cost is low, and it is easy for industrial production.

In additional examples of the present disclosure, use of the negative electrode active material or the negative electrode sheet in a secondary battery, a battery module, a battery pack, or an electrical device is provided.

It can be understood that the negative electrode active material or the negative electrode sheet of the present disclosure, due to use of the negative electrode active material of the present disclosure, possesses all the beneficial effects of the negative electrode active material. This negative electrode sheet can achieve a high particle packing density and an electrode sheet compaction level. This not only ensures good electrical contact between the negative electrode active materials but also guarantees sufficient electrolyte wetting, thereby addressing the lithium plating issue at corners, and enhancing high-temperature cycle life while balancing charging capability and energy density level. Specifically: For the secondary battery, a higher particle packing density and an electrode sheet compaction level can increase the loading capacity of the negative electrode active material, thereby enhancing the energy density of the battery, and extending the usage time of the battery. Good electrical contact can improve electronic conduction performance, reduce resistance loss, and improve the charging speed and efficiency of the battery. A higher electrode sheet compaction level can enhance the contact between the negative electrode active material and the electrolyte, allowing the electrolyte to more sufficiently wet the negative electrode active material, reducing interfacial impedance between the electrolyte and the negative electrode active material, and enhancing the high-temperature cycle life of the battery.

For the battery module, a higher particle packing density and an electrode sheet compaction level can increase the loading capacity of the negative electrode active material, thereby enhancing the energy density of the module, allowing the module to accommodate more charge and store more energy within a limited space. Good electrical contact can reduce internal resistance and enhance current transmission capacity, allowing the battery module to output high power more rapidly.

For the battery pack, the safety can be enhanced. A higher particle packing density and an electrode sheet compaction level can reduce internal voids in the battery, which restricts the formation of lithium dendrites, thereby lowering the risk of internal short circuits and improving the safety performance of the battery pack. A higher compaction level can reduce the interfacial impedance between the negative electrode active material and the electrolyte, improve the charge transfer efficiency of the battery pack and extend the cycle life of the battery.

For the electrical device, the endurance of the electrical devices can be increased. A higher energy density can provide a battery with a larger capacity, extending the runtime of the electrical device, and meeting long-term usage needs. Additionally, it can improve the performance stability of the electrical device. Good electrical contact and sufficiently wetted electrolyte can improve the battery efficiency, reduce energy loss, and enhance the overall performance and stability of the electrical device.

Therefore, the secondary battery, battery module, battery pack, or electrical device comprising the negative electrode active material or the negative electrode sheet of the present disclosure can exhibit improved performance in terms of energy density, charging capability, high-temperature cycle life, power output, safety, and cycle life.

The following specific examples and comparative examples below will further illustrate the technical solutions of the present disclosure.

In the examples and comparative examples, the graphite is self-prepared. By using the preparation method outlined below, the depressurization rebound rate can be controlled by adjusting the graphitization temperature.

It should be noted that a higher graphitization temperature leads to better graphite growth, higher crystallinity, softer active materials, and lower depressurization rebound rate. It should also be noted that the residual carbon content corresponds to the coating amount on the surface of the graphite material. A higher residual carbon content and a larger coating area results in a reduced specific surface area.

The method for preparing the graphite was provided, which included the following steps:

petroleum coke or needle coke was selected as a raw material (i.e., a graphite precursor);

the precursor and high-temperature asphalt as a binder were mixed according to a mass ratio of 7 -9:1 -2 (the ratio in the examples was 8:2) uniformly, fed into a horizontal retort, heated to a temperature of 250 °C to 550 °C (the temperature in the examples was 300°C), and maintained at this temperature for 5 hours to 48 hours (the condition in the examples was 24 hours) to obtain a granulated semi-finished product; and

high-temperature graphitization treatment was conducted on the granulated semi-finished product at a graphitization temperature of 2800 °C to 3500 °C (specific conditions were provided in Table 1) for a graphitization time of 10 hours to 200 hours (the graphitization time in the examples was 90 hours), to obtain a graphite negative electrode active material.

Asphalt was used as a coating agent. The residual carbon content of the coating layer after coating and carbonization was controlled at 5% to 15% (the specific residual carbon contents were provided in Table 1).

**Example 1**

A negative electrode active material comprising a graphite material was provided, wherein the graphite material comprised the first graphite and the second graphite.

The powder compaction depressurization rebound rate v of the first graphite and the second graphite was 5%.

The ratio c of the number distribution particle size Dn10 of the first graphite to the second graphite was 1.2.

The particle size distribution width of the first graphite and the second graphite was 0.7.

The Dv50 particle size $d_1$ of the first graphite was 10 $\mu$m, and the Dv50 particle size $d_2$ of the second graphite was 5 $\mu$m.

The specific surface area s of the negative electrode active material was 1.2 m$^2$/g.

The specific surface area s of the negative electrode active material, the powder compaction depressurization rebound rate v, and the Dv50 particle size $d_1$ of the first graphite satisfy the relationship of: s - 0.02 $\times$ $d_1 \leq$ 30v.

The first graphite and the second graphite were mixed uniformly to obtain the negative electrode active material.

The negative electrode active material, styrene-butadiene rubber as a binder, and sodium carboxymethyl cellulose as a dispersant were dissolved in deionized water in a weight ratio of 98:1:1 to obtain different negative electrode slurries after stirring and uniformly mixing. After drying, cold pressing, edge trimming, cutting, and slitting were performed to produce a negative electrode sheet for a lithium-ion battery.

Preparation of the positive electrode sheet:

NCM523 as a positive electrode active material, acetylene black as a conductive agent, and polyvinylidene fluoride (PVDF) as a binder were mixed in a mass ratio of 97:2:1, added with N-Methylpyrrolidone (NMP) as a solvent, stirred with a vacuum stirrer until a homogeneous system was formed, to obtain a positive electrode slurry.

The positive electrode slurry was uniformly coated onto an aluminum foil as a positive electrode current collector, air-dried at room temperature, then transferred to an oven for further drying, followed by cold pressing and slitting to obtain a positive electrode sheet.

Preparation of the electrolyte:

Ethylene carbonate (EC), ethyl methyl carbonate (EMC), and diethyl carbonate (DEC) were mixed in a volume ratio of 1:1:1 to obtain an organic solvent. Subsequently, a sufficiently dried lithium salt, LiPF$_6$ was dissolved in the organic solvent after mixing to prepare an electrolyte with a concentration of 1 mol/L.

Preparation of the separator:

A polyethylene film was used as a separator.

Preparation of the lithium-ion battery:

The aforementioned positive electrode sheet, separator, and negative electrode sheet were stacked in order, with the separator positioned between the positive electrode and negative electrode sheets for isolation, and then wound to obtain a bare battery cell.

The bare battery cell was placed in an outer packaging shell, dried, and then introduced with the electrolyte. Following processes including vacuum sealing, standing, formation, and shaping, were performed to obtain the lithium-ion battery.

Based on Example 1, Examples 2-19 and Comparative Examples 1-9 were designed, as detailed in Tables 1-2.

**Table 1**

| Group | Temperature of graphite | Residual carbon content | s-0.02×d | 30v | Ratio c of Dn10 of first graphite and second graphite | Specific surface area s of active material | Powder depressurization rebound rate v of active material |
|---|---|---|---|---|---|---|---|
| Example 1 | 3200 | 10.0% | 1.0 | 1.5 | 1.2 | 1.2 | 5% |
| Example 2 | 3200 | 9.5% | 1.2 | 1.5 | 1.2 | 1.4 | 5% |
| Example 3 | 3200 | 9.0% | 1.4 | 1.5 | 1.2 | 1.6 | 5% |
| Example 4 | 2900 | 8.5% | 1.6 | 3.6 | 1.2 | 1.8 | 12% |
| Example 5 | 2900 | 8.0% | 1.8 | 3.6 | 1.2 | 2.0 | 12% |
| Example 6 | 3200 | 10.0% | 1.0 | 1.5 | 1.7 | 1.2 | 5% |
| Example 7 | 3200 | 10.0% | 1.0 | 1.5 | 2.2 | 1.2 | 5% |

(continued)

| Group | Temperature of graphite | Residual carbon content | s-0.02×d | 30v | Ratio c of Dn10 of first graphite and second graphite | Specific surface area s of active material | Powder depressurization rebound rate v of active material |
|---|---|---|---|---|---|---|---|
| Example 8 | 3200 | 10.0% | 1.0 | 1.5 | 2.7 | 1.2 | 5% |
| Example 9 | 3200 | 10.0% | 1.0 | 1.5 | 3.2 | 1.2 | 5% |
| Example 10 | 3100 | 10.0% | 1.0 | 2.1 | 1.2 | 1.2 | 7% |
| Example 11 | 3000 | 10.0% | 1.0 | 3 | 1.2 | 1.2 | 10% |
| Example 12 | 2900 | 10.0% | 1.0 | 3.6 | 1.2 | 1.2 | 12% |
| Example 13 | 3200 | 10.0% | 1.0 | 1.5 | 1.2 | 1.2 | 5% |
| Example 14 | 3200 | 10.0% | 1.0 | 1.5 | 1.2 | 1.2 | 5% |
| Example 15 | 3200 | 10.0% | 1.0 | 1.5 | 1.2 | 1.2 | 5% |
| Example 16 | 3200 | 10.0% | 1.0 | 1.5 | 1.2 | 1.2 | 5% |
| Example 17 | 3200 | 10.0% | 1.0 | 1.5 | 1.2 | 1.2 | 5% |
| Example 18 | 3200 | 10.0% | 1.0 | 1.5 | 1.2 | 1.2 | 5% |
| Example 19 | 2900 | 10.0% | 1.0 | 3.6 | 1.2 | 1.2 | 12% |
| Comparative Example 1 | 3200 | 10.0% | 1.0 | 1.5 | 5 | 1.2 | 5% |
| Comparative Example 2 | 2600 | 10.0% | 1.0 | 6 | 1.2 | 1.2 | 20% |
| Comparative Example 3 | 3200 | 10.0% | 1.0 | 1.5 | 1.2 | 1.2 | 5% |
| Comparative Example 4 | 3200 | 10.0% | 0.8 | 1.5 | 1.2 | 1.2 | 5% |
| Comparative Example 5 | 3200 | 10.0% | 1.1 | 1.5 | 1.2 | 1.2 | 5% |
| Comparative Example 6 | 3200 | 3.0% | 4.8 | 1.5 | 1.2 | 5.0 | 5% |
| Comparative Example 7 | 3200 | 16.0% | 0.3 | 1.5 | 1.2 | 0.5 | 5% |
| Comparative Example 8 | 3200 | 8.0% | 1.8 | 1.5 | 1.2 | 2.0 | 5% |
| Comparative Example 9 | 2900 | 10.0% | 0.9 | 3.6 | 1.2 | 1.2 | 12% |

**Table 2**

| Group | First graphite (80%) | | Second graphite (20%) | |
|---|---|---|---|---|
| | Particle size Dv50 = d | Particle size distribution width F1 | Particle size Dv50 | Particle size distribution width F2 |
| Example 1 | 10 | 0.5 | 5 | 0.7 |
| Example 2 | 10 | 0.5 | 5 | 0.7 |
| Example 3 | 10 | 0.5 | 5 | 0.7 |
| Example 4 | 12 | 0.5 | 5 | 0.7 |

(continued)

| Group | First graphite (80%) | | Second graphite (20%) | |
|---|---|---|---|---|
| | Particle size Dv50 = d | Particle size distribution width F1 | Particle size Dv50 | Particle size distribution width F2 |
| Example 5 | 12 | 0.5 | 5 | 0.7 |
| Example 6 | 10 | 0.5 | 5 | 0.7 |
| Example 7 | 10 | 0.5 | 5 | 0.7 |
| Example 8 | 10 | 0.5 | 5 | 0.7 |
| Example 9 | 10 | 0.5 | 5 | 0.7 |
| Example 10 | 10 | 0.5 | 5 | 0.7 |
| Example 11 | 10 | 0.5 | 5 | 0.7 |
| Example 12 | 10 | 0.5 | 5 | 0.7 |
| Example 13 | 10 | 1.0 | 5 | 0.7 |
| Example 14 | 10 | 1.5 | 5 | 0.7 |
| Example 15 | 10 | 2.0 | 5 | 0.7 |
| Example 16 | 10 | 0.5 | 5 | 1.0 |
| Example 17 | 10 | 0.5 | 5 | 1.5 |
| Example 18 | 10 | 0.5 | 5 | 2.0 |
| Example 19 | 12 | 0.5 | 5 | 0.7 |
| Comparative Example 1 | 10 | 0.5 | 5 | 0.7 |
| Comparative Example 2 | 10 | 0.5 | 5 | 0.7 |
| Comparative Example 3 | 10 | 3.0 | 5 | 0.7 |
| Comparative Example 4 | 20 | 0.5 | 5 | 0.7 |
| Comparative Example 5 | 7 | 0.5 | 5 | 0.7 |
| Comparative Example 6 | 10 | 0.5 | 5 | 0.7 |
| Comparative Example 7 | 10 | 0.5 | 5 | 0.7 |
| Comparative Example 8 | 12 | 0.5 | 5 | 0.7 |
| Comparative Example 9 | 16 | 0.5 | 5 | 0.7 |

In Table 1 and Table 2, the Dn10 and Dv50 of the negative electrode active material were measured using a laser diffraction particle size distribution analyzer (Malvern Mastersizer 3000), according to the particle size distribution laser diffraction method, GB/T19077-2016, to obtain the particle size distribution and derive Dn10 and Dv50.

Measurement of powder compaction density: The compaction density value PD1 at 5T was measured with a compaction density meter (CARVER, USA), according to the powder compaction testing method of graphite negative electrode materials, GB/T24533-2019. After standing for 30 min, the powder compacted film height was measured again to calculate the compaction density PD2. The depressurization rebound rate v = (PD1 - PD2) / PD1.

Compaction density PD of the coating on the negative electrode sheet: Firstly, a coating areal density of the negative electrode sheet was measured, then a thickness of the negative electrode film layer was measured with a myriadmeter (at least 10 measurements were taken and averaged). According to the formula: compaction density of coating = coating areal density of negative electrode sheet (mg/cm$^2$) / thickness of negative electrode film layer (cm), the compaction density of the negative electrode film layer PD (in mg/cm$^3$) was calculated and then converted to g/cm$^3$.

**Performance Testing**

Kinetic performance testing:

At 25°C, the lithium-ion batteries prepared from the examples and comparative examples were fully charged at 5C and fully discharged at 1C for 50 cycles. Then the lithium-ion batteries were fully charged at 5C again. The negative electrode sheets were then disassembled to observe the lithium plating on the surfaces of the negative electrode sheets. If the area of lithium plating on the negative electrode surface was less than 5%, it was considered minor lithium plating. If the area of lithium plating on the negative electrode surface was 5% to 40%, it was considered moderate lithium plating. If the area of lithium plating on the negative electrode surface was greater than 40%, it was considered severe lithium plating.

High-temperature cycling performance testing:

At 45°C, the lithium-ion batteries prepared from the examples and comparative examples were subjected to full charge and full discharge cycling testing by charging at a rate of 4.5C and discharging at a rate of 1C, until the capacity of the lithium-ion battery was below 80% of the initial capacity, and the number of cycles was recorded.

Volume energy density (Wh/L) = battery capacity (mAh) $\times$ 3.6 (V) / (thickness (cm) $\times$ width (cm) $\times$ length (cm)).

The results were shown in Table 3.

**Table 3**

| No. | Compaction level of negative electrode sheet, g/cm$^3$ | Energy density, Wh/L | Corner kinetics performance | Cycle capacity retention rate @ 45°C, 800cls | Cycle thickness expansion @ 45°C, 800cls |
|---|---|---|---|---|---|
| Example 1 | 1.75 | 780 | No lithium plating | 89.5% | 6.8% |
| Example 2 | 1.75 | 780 | No lithium plating | 88.5% | 6.9% |
| Example 3 | 1.75 | 780 | No lithium plating | 88.1% | 7.2% |
| Example 4 | 1.71 | 775 | No lithium plating | 87.4% | 7.4% |
| Example 5 | 1.71 | 775 | No lithium plating | 87.3% | 7.5% |
| Example 6 | 1.75 | 782 | No lithium plating | 89.2% | 6.7% |
| Example 7 | 1.75 | 786 | No lithium plating | 89.6% | 6.8% |
| Example 8 | 1.75 | 787 | No lithium plating | 89.4% | 6.9% |
| Example 9 | 1.75 | 783 | No lithium plating | 89.5% | 7.0% |
| Example 10 | 1.73 | 777 | No lithium plating | 89.1% | 6.7% |
| Example 11 | 1.72 | 775 | No lithium plating | 89.7% | 6.6% |
| Example 12 | 1.71 | 774 | No lithium plating | 89.8% | 6.7% |
| Example 13 | 1.75 | 780 | No lithium plating | 89.7% | 6.9% |
| Example 14 | 1.75 | 781 | No lithium plating | 89.2% | 7.1% |
| Example 15 | 1.75 | 781 | No lithium plating | 87.3% | 7.4% |
| Example 16 | 1.75 | 780 | No lithium plating | 89.5% | 6.8% |
| Example 17 | 1.75 | 780 | No lithium plating | 89.4% | 6.7% |
| Example 18 | 1.75 | 780 | No lithium plating | 89.4% | 6.9% |
| Example 19 | 1.71 | 781 | No lithium plating | 89.1% | 6.4% |
| Comparative Example 1 | 1.75 | 768 | No lithium plating | 86.8% | 9.9% |
| Comparative Example 2 | 1.55 | 750 | No lithium plating | 82.2% | 10.5% |
| Comparative Example 3 | 1.75 | 782 | No lithium plating | 73.7% | 18.6% |
| Comparative Example 4 | 1.76 | 782 | Severe lithium plating | 67.8% | 20.2% |

(continued)

| No. | Compaction level of negative electrode sheet, g/cm$^3$ | Energy density, Wh/L | Corner kinetics performance | Cycle capacity retention rate @ 45°C, 800cls | Cycle thickness expansion @ 45°C, 800cls |
|---|---|---|---|---|---|
| Comparative Example 5 | 1.74 | 768 | No lithium plating | 79.1% | 16.2% |
| Comparative Example 6 | 1.75 | 780 | Severe lithium plating | 51.1% | 37.2% |
| Comparative Example 7 | 1.75 | 781 | Severe lithium plating | 69.7% | 18.5% |
| Comparative Example 8 | 1.75 | 780 | Moderate lithium plating | 73.0% | 17.5% |
| Comparative Example 9 | 1.71 | 781 | Severe lithium plating | 70.4% | 18.7% |

The negative electrode active material or the negative electrode sheet of the present disclosure, due to use of the negative electrode active material of the present disclosure, possesses all the beneficial effects of the negative electrode active material. This negative electrode sheet can achieve a high particle packing density and an electrode sheet compaction level. This not only ensures good electrical contact between the negative electrode active materials but also guarantees sufficient electrolyte wetting. This, in turn, enhances the high-temperature cycle life while balancing charging capability and energy density level, and exhibits excellent kinetic performance, addressing the lithium plating issue at corners. Specifically:

For the secondary battery, a higher particle packing density and an electrode sheet compaction level can increase the loading capacity of the negative electrode active material, thereby enhancing the energy density of the battery, and extending the usage time of the battery. Good electrical contact can improve electronic conduction performance, reduce resistance loss, and improve the charging speed and efficiency of the battery. A higher electrode sheet compaction level can enhance the contact between the negative electrode active material and the electrolyte, allowing the electrolyte to more sufficiently wet the negative electrode active material, reducing interfacial impedance between the electrolyte and the negative electrode active material, and enhancing the high-temperature cycle life of the battery.

For the battery module, a higher particle packing density and an electrode sheet compaction level can increase the loading capacity of the negative electrode active material, thereby enhancing the energy density of the module, allowing the module to accommodate more charge and store more energy within a limited space. Good electrical contact can reduce internal resistance and enhance current transmission capacity, allowing the battery module to output high power more rapidly.

For the battery pack, the safety can be enhanced. A higher particle packing density and an electrode sheet compaction level can reduce internal voids in the battery, which restricts the formation of lithium dendrites, thereby lowering the risk of internal short circuits and improving the safety performance of the battery pack. A higher compaction level can reduce the interfacial impedance between the negative electrode active material and the electrolyte, improve the charge transfer efficiency of the battery pack and extend the cycle life of the battery.

For the electrical device, the endurance of the electrical devices can be increased. A higher energy density can provide a battery with a larger capacity, extending the runtime of the electrical device, and meeting long-term usage needs. Additionally, it can improve the performance stability of the electrical device. Good electrical contact and sufficiently wetted electrolyte can improve the battery efficiency, reduce energy loss, and enhance the overall performance and stability of the electrical device.

Therefore, the secondary battery, battery module, battery pack, or electrical device comprising the negative electrode active material or the negative electrode sheet of the present disclosure can exhibit improved performance in terms of energy density, charging capability, high-temperature cycle life, power output, safety, and cycle life.

As can be seen from Examples 6-9, 13-15, and Comparative Examples 1 and 3, when the depressurization rebound rate v of the two types of graphite is 5% to 12%, in conjunction with the ratio of Dn10 of the two types of graphite satisfying the range of 1.2 to 3.5 and the particle size distribution width of the first graphite satisfying 0.5 to 2.0, the filling rate of the gaps between graphite particles can be controlled, which increases the packing density. When the parameters are not in these ranges, the packing density is poor, resulting in lower energy density.

As can be seen from Examples 1-19 and Comparative Examples 2 and 3, when the powder depressurization rebound rate v is too high, the compaction density significantly decreases, resulting in low energy density. When the particle size distribution width of the first graphite is too high, there are more excessive fine powder, and the high-temperature cycling performance and thickness expansion deteriorate significantly.

As can be seen from Examples 1-19 and Comparative Examples 4, 7 and 9, among the specific surface area, depressurization rebound rate, and particle size of the first graphite, a particle size that is too large or a specific surface area that is too small can lead to severe lithium plating at corners. As can be seen from Examples 1 and 12 and Comparative Example 9, an increase in depressurization rebound can alleviate lithium plating at corners, enhance high-temperature cycling performance, and suppress cycle expansion. However, addressing the corner lithium plating issue requires the cooperation of specific surface area, depressurization rebound rate, and particle size of the first graphite. A single factor cannot address the corner lithium plating issue. For example, in Comparative Example 9, although the depressurization rebound is very high, which is beneficial for improving the penetration capacity of electrolyte perpendicular to the electrode sheet at the corner arcs, the excessively large particle size increases the lithium ion transport path, still leading to lithium plating at corners. Moreover, an excessively large particle size significantly reduces high-temperature cycling performance and increases thickness expansion.

As can be seen from Examples 1-19 and Comparative Example 8, even if the specific surface area, depressurization rebound rate, and Dv50 particle size of the first graphite are within the range of the present disclosure, moderate lithium plating still occurs in the corner region if the relationship $s - 0.02 \times d_1 \leq 30v$ is not satisfied.

As can be seen from Examples 1-19 and Comparative Examples 1-9, in the present disclosure, by selecting two types of graphite with a certain depressurization rebound rate, combined with controlling the range of Dn10 and limiting the distribution width, the negative electrode sheet can achieve a high particle packing density and an electrode compaction level. Furthermore, by limiting the specific surface area and particle size range, cooperated with the depressurization rebound rate, Dn10, and particle size distribution, good electrical contact between the negative electrode active materials is ensured, thereby balancing energy density and high-temperature cycling performance. Additionally, by regulating the specific surface area, depressurization rebound rate, and Dv50 particle size of the first graphite to satisfy the relationship of $s - 0.02 \times d_1 \leq 30v$, the corner lithium plating issue is addressed on the basis of balancing charging capability, energy density, and high-temperature cycling performance.

The present disclosure has been described in detail hereinabove in conjunction with the examples, but the present disclosure is not limited to the above examples. Various changes can be made within the knowledge of those skilled in the art without departing from the purpose of the present disclosure.

**Claims**

1.   A negative electrode active material comprising a graphite material, wherein the graphite material comprises a first graphite and a second graphite, a powder compaction depressurization rebound rate v of the first graphite and the second graphite is 5% to 12%, a ratio c of a number distribution particle size Dn10 of the first graphite and the second graphite is 1.2 to 3.5, a particle size distribution width of the first graphite and the second graphite satisfies 0.5 to 2.0, a Dv50 particle size $d_1$ of the first graphite is 10 $\mu$m to 15 $\mu$m, and a Dv50 particle size $d_2$ of the second graphite is 5 $\mu$m to 10 $\mu$m.

2.   The negative electrode active material according to claim 1, wherein a specific surface area s of the negative electrode active material is 1.0 $m^2$/g to 2.0 $m^2$/g.

3.   The negative electrode active material according to claim 1, wherein the powder compaction depressurization rebound rate v of the first graphite and the second graphite is 5% to 8%.

4.   The negative electrode active material according to claim 1, wherein the particle size distribution width of the first graphite and the second graphite satisfies 0.5 to 1.5.

5.   The negative electrode active material according to claim 1, wherein a mass ratio of the second graphite in the negative electrode active material is 5% to 40%.

6.   The negative electrode active material according to claim 1, wherein a mass ratio of the first graphite to the second graphite is 1- 5:1.

7.   The negative electrode active material according to any one of claims 1 to 6, wherein the specific surface area s, the powder compaction depressurization rebound rate v, and the Dv50 particle size $d_1$ of the first graphite satisfy a relationship of: $s - 0.02 \times d_1 \leq 30v$.

8.   The negative electrode active material according to any one of claims 1 to 6, wherein a method for preparing the graphite material comprises the following steps:

        (1) mixing a graphite precursor and asphalt, heating a resulting mixture to a temperature, and maintaining the temperature for a period to obtain a granulated semi-finished product; and
(2) performing graphitization treatment on the product obtained in step (1) to obtain the graphite material.

9. The negative electrode active material according to claim 8, wherein a temperature of the graphitization treatment is 2800 °C to 3500 °C; and/or, the graphitization treatment lasts for 10 hours to 200 hours.

10. A negative electrode sheet, wherein preparation materials for the negative electrode sheet comprise the negative electrode active material according to any one of claims 1 to 9.

11. A method for preparing the negative electrode sheet of claim 10, comprising the following steps: mixing the negative electrode active material according to any one of claims 1 to 7 with a binder and a dispersant to form a negative electrode slurry, coating the negative electrode slurry onto a negative electrode current collector, and then drying to obtain the negative electrode sheet.

12. Use of the negative electrode active material according to any one of claims 1 to 9 or the negative electrode sheet according to claim 10 in a secondary battery, a battery module, a battery pack, or an electrical device.

## INTERNATIONAL SEARCH REPORT

| International application No. |
|---|
| **PCT/CN2023/143306** |

### A. CLASSIFICATION OF SUBJECT MATTER

H01M4/36(2006.01)i; H01M4/587(2010.01)i; H01M4/62(2006.01)i; H01M10/0525(2010.01)i

According to International Patent Classification (IPC) or to both national classification and IPC

### B. FIELDS SEARCHED

Minimum documentation searched (classification system followed by classification symbols)

IPC:H01M4/-

Documentation searched other than minimum documentation to the extent that such documents are included in the fields searched

Electronic data base consulted during the international search (name of data base and, where practicable, search terms used)

CNTXT, DWPI, VEN, CNKI, ENTXTC, ISI_Web of Science: 电池, 负极, 活性材料, 石墨, 两, 二, 反弹率, 回弹, 率, 泄压, 压实, 堆积密度, 粒径, 分布, 比表面积, Dv50, Dn10, batter+, cathode, negative, active material, graphite, graphitization, two, bulk density, compaction, pressure relief, rebound rate, ratio, distribution, particle, size, specific surface area

### C. DOCUMENTS CONSIDERED TO BE RELEVANT

| Category* | Citation of document, with indication, where appropriate, of the relevant passages | Relevant to claim No. |
|---|---|---|
| A | CN 117059763 A (NINGDE AMPEREX TECHNOLOGY LTD.) 14 November 2023 (2023-11-14) <br> description, paragraphs 30-58 | 1-12 |
| A | CN 114759157 A (SUNWODA ELECTRIC VEHICLE BATTERY CO., LTD.) 15 July 2022 (2022-07-15) <br> description, paragraphs 3-31 | 1-12 |
| A | CN 109314239 A (SHOWA DENKO K.K.) 05 February 2019 (2019-02-05) <br> description, paragraphs 24-45 | 1-12 |
| A | CN 113875037 A (CONTEMPORARY AMPEREX TECHNOLOGY CO., LTD.) 31 December 2021 (2021-12-31) <br> description, paragraphs 6-16 | 1-12 |
| A | WO 2023082157 A1 (CONTEMPORARY AMPEREX TECHNOLOGY CO., LTD.) 19 May 2023 (2023-05-19) <br> description, paragraphs 5-20 | 1-12 |

☑ Further documents are listed in the continuation of Box C.    ☑ See patent family annex.

| | |
|---|---|
| *   Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 August 2024** | **28 August 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/143306** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2021152778 A1 (SHOWA DENKO MATERIALS CO., LTD.) 05 August 2021 (2021-08-05)<br>      description, paragraphs 9-145 | 1-12 |

Form PCT/ISA/210 (second sheet) (July 2022)

### INTERNATIONAL SEARCH REPORT
**Information on patent family members**

International application No.

**PCT/CN2023/143306**

| Patent document cited in search report | | | Publication date (day/month/year) | Patent family member(s) | | | Publication date (day/month/year) |
|---|---|---|---|---|---|---|---|
| CN | 117059763 | A | 14 November 2023 | None | | | |
| CN | 114759157 | A | 15 July 2022 | None | | | |
| CN | 109314239 | A | 05 February 2019 | JPWO | 2017221895 | A1 | 06 December 2018 |
| | | | | JP | 6472933 | B2 | 20 February 2019 |
| | | | | WO | 2017221895 | A1 | 28 December 2017 |
| | | | | US | 2019237763 | A1 | 01 August 2019 |
| | | | | KR | 20190003695 | A | 09 January 2019 |
| | | | | KR | 102002797 | B1 | 23 July 2019 |
| | | | | TW | 201813172 | A | 01 April 2018 |
| | | | | TWI | 671939 | B | 11 September 2019 |
| | | | | EP | 3477749 | A1 | 01 May 2019 |
| | | | | EP | 3477749 | A4 | 26 June 2019 |
| CN | 113875037 | A | 31 December 2021 | None | | | |
| WO | 2023082157 | A1 | 19 May 2023 | US | 2023231134 | A1 | 20 July 2023 |
| | | | | EP | 4207372 | A1 | 05 July 2023 |
| WO | 2021152778 | A1 | 05 August 2021 | US | 2023084916 | A1 | 16 March 2023 |
| | | | | JPWO | 2021152778 | A1 | 05 August 2021 |
| | | | | KR | 20220134559 | A | 05 October 2022 |
| | | | | EP | 4099442 | A1 | 07 December 2022 |
| | | | | EP | 4099442 | A4 | 22 March 2023 |

Form PCT/ISA/210 (patent family annex) (July 2022)